# EUROPÄISCHE PATENTSCHRIFT

(11) **EP 4 076 851 B1**
(45) Veröffentlichungstag und Bekanntmachung des Hinweises auf die Patenterteilung: **22.05.2024**
(21) Anmeldenummer: 20819794.7
(22) Anmeldetag: 10.12.2020
(51) Int. Cl.: B25C 1/06, H02K 11/00, H02K 33/00

(54) **ARBEITSGERÄT**
WORKING IMPLEMENT
APPAREIL DE TRAVAIL

(30) Priorität: 20.12.2019 EP 19218901
(43) Veröffentlichungstag der Anmeldung: 26.10.2022
(73) Patentinhaber: Hilti Aktiengesellschaft, 9494 Schaan (LI)
(72) Erfinder: ABU ANTOUN, Chafic, 9470 Buchs (CH); SCHMID, Florian, 9470 Buchs SG (CH); BINDER, Albert, 9470 Buchs (CH); GUT, Manuel, 6811 Göfis (AT)
(74) Vertreter: Hilti Aktiengesellschaft Corporate Intellectual Property
(86) Internationale Anmeldenummer: PCT/EP2020/085440
(87) Internationale Veröffentlichungsnummer: WO 2021/122270

(56) Entgegenhaltungen:
- WO-A1-2019/211264
- WO-A1-2019/233845

## Beschreibung

Die vorliegende Erfindung betrifft ein Arbeitsgerät, wie beispielsweise ein Setzgerät zum Eintreiben von Befestigungselementen in einen Untergrund.

Derartige Arbeitsgeräte weisen oft einen Arbeitskolben auf, welcher dafür vorgesehen ist, sich entlang einer Arbeitsachse zu bewegen. Angetrieben wird der Arbeitskolben von einem Antrieb, welcher den Arbeitskolben beschleunigt. Die WO 2018/104406 A1 beschreibt einen Antrieb, welcher einen elektrischen Kondensator, einen an dem Arbeitskolben angeordneten Kurzschlussläufer und eine Erregerspule aufweist, welche bei einer Schnellentladung des Kondensators mit Strom durchflossen wird und ein Magnetfeld erzeugt, um den Arbeitskolben zu beschleunigen.

Setzgeräte weisen üblicherweise eine Aufnahme für ein Befestigungselement auf, aus welcher heraus ein darin aufgenommenes Befestigungselement entlang einer Arbeitsachse in den Untergrund befördert wird. Das Arbeitselement wird hierfür von dem Antrieb entlang der Arbeitsachse auf das Befestigungselement zu angetrieben. Aus der US 6,830,173 B2 ist ein Setzgerät mit einem Antrieb bekannt, welcher einen elektrischen Kondensator und eine Spule aufweist.

WO 2019/211264 A1 offenbart ein Arbeitsgerät nach dem Oberbegriff von Anspruch 1.

Die Aufgabe der vorliegenden Erfindung liegt darin, ein Setzgerät der vorgenannten Art bereitzustellen, bei dem ein hoher Wirkungsgrad und/oder eine gute Setzqualität gewährleistet ist.

Die Aufgabe ist gelöst bei einem vorzugsweise handgeführten Arbeitsgerät zum Bearbeiten eines Untergrunds, aufweisend einen Stator und einen Arbeitskolben, welcher dafür vorgesehen ist, sich relativ zu dem Stator entlang einer Arbeitsachse zu bewegen, weiterhin aufweisend einen Antrieb, welcher dafür vorgesehen ist, den Arbeitskolben von einer Startposition aus entlang der Arbeitsachse auf den Untergrund zu anzutreiben, wobei der Antrieb eine an dem Arbeitskolben angeordnete Kolbenspule und eine an dem Stator angeordnete erste Statorspule aufweist, wobei die erste Statorspule und/oder die Kolbenspule dafür vorgesehen ist, mit Strom durchflossen zu werden und ein Magnetfeld zu erzeugen, und wobei die Kolbenspule dafür vorgesehen ist, während einer Bewegung des Arbeitskolbens relativ zu dem Stator entlang der Arbeitsachse in die erste Statorspule einzutauchen.

Eine vorteilhafte Ausgestaltung ist dadurch gekennzeichnet, dass die Kolbenspule eine Kolbenspulenachse aufweist und die erste Statorspule eine erste Statorspulenachse aufweist, welche parallel zur Kolbenspulenachse orientiert ist. Bevorzugt fällt die erste Statorspulenachse mit der Kolbenspulenachse zusammen. Ebenfalls bevorzugt sind die Kolbenspule und die erste Statorspule gleichsinnig mit Strom beaufschlagbar sind, um einander gleichgerichtete Magnetfelder zu erzeugen und die Kolbenspule in die erste Statorspule hinein zu beschleunigen. Besonders bevorzugt weist der Antrieb eine an dem Stator angeordnete zweite Statorspule auf, welche relativ zu der ersten Statorspule entlang der Arbeitsachse versetzt angeordnet ist und eine zweite Statorspulenachse aufweist, welche parallel zur Kolbenspulenachse orientiert ist, wobei die Kolbenspule und die zweite Statorspule gleichsinnig mit Strom beaufschlagbar sind, um einander gleichgerichtete Magnetfelder zu erzeugen und die Kolbenspule in die zweite Statorspule hinein zu beschleunigen, nachdem die Kolbenspule in die erste Statorspule hinein beschleunigt wurde. Die Kolbenspule wird dabei relativ zu der ersten Statorspule und relativ zu der zweiten Statorspule in die gleiche Richtung beschleunigt.

Eine vorteilhafte Ausgestaltung ist dadurch gekennzeichnet, dass die Kolbenspule und die erste Statorspule gegensinnig mit Strom beaufschlagbar sind, um einander entgegengesetzte Magnetfelder zu erzeugen und die Kolbenspule aus der ersten Statorspule heraus zu beschleunigen. Bevorzugt weist der Antrieb eine an dem Stator angeordnete zweite Statorspule auf, welche relativ zu der ersten Statorspule entlang der Arbeitsachse versetzt angeordnet ist und eine zweite Statorspulenachse aufweist, welche parallel zur Kolbenspulenachse orientiert ist, wobei die Kolbenspule und die zweite Statorspule gegensinnig mit Strom beaufschlagbar sind, um einander entgegengerichtete Magnetfelder zu erzeugen und die Kolbenspule aus der zweiten Statorspule heraus zu beschleunigen, nachdem die Kolbenspule aus der ersten Statorspule heraus beschleunigt wurde. Die Kolbenspule wird dabei relativ zu der ersten Statorspule und relativ zu der zweiten Statorspule in die gleiche Richtung beschleunigt. Bevorzugt sind die erste Statorspule und die zweite Statorspule relativ zueinander gleichsinnig gewickelt.

Eine vorteilhafte Ausgestaltung ist dadurch gekennzeichnet, dass der Antrieb einen ersten Kondensator aufweist, wobei die erste Statorspule und/oder die Kolbenspule elektrisch mit dem ersten Kondensator verbindbar ist, um bei einer Schnellentladung des ersten Kondensators mit Strom durchflossen zu werden und das Magnetfeld zu erzeugen. Bevorzugt weist der Antrieb einen zweiten Kondensator auf, wobei die zweite Statorspule und/oder die Kolbenspule elektrisch mit dem zweiten Kondensator verbindbar ist, um bei einer Schnellentladung des zweiten Kondensators mit Strom durchflossen zu werden und das Magnetfeld zu erzeugen. Besonders bevorzugt umfasst das Arbeitsgerät eine Erfassungseinrichtung zum Erfassen einer Position des Arbeitskolbens und eine Steuereinrichtung zur Beaufschlagung der zweiten Statorspule mit elektrischem Strom in Abhängigkeit einer von der Erfassungseinrichtung erfassten Position des Arbeitskolbens.

Eine vorteilhafte Ausgestaltung ist dadurch gekennzeichnet, dass die Kolbenspule und die erste Statorspule elektrisch seriell miteinander verschaltet und relativ zueinander gleichsinnig oder gegensinnig gewickelt sind.

Eine vorteilhafte Ausgestaltung ist dadurch gekennzeichnet, dass die Kolbenspule einen Kolbenspulenaussendurchmesser aufweist, und wobei die erste Statorspule einen Statorspuleninnendurchmesser aufweist, welcher grösser ist als der Kolbenspulenaussendurchmesser.

Eine vorteilhafte Ausgestaltung ist dadurch gekennzeichnet, dass der Arbeitskolben ein Reluktanzelement aus einem weichmagnetischen Material aufweist, welches von dem Magnetfeld, das von der ersten Statorspule erzeugt wird, in die erste Statorspule hineinbeschleunigt wird. Bevorzugt springt das Reluktanzelement quer zur Arbeitsachse von dem übrigen Arbeitskolben auf die erste Statorspule zu vor.

Eine vorteilhafte Ausgestaltung ist dadurch gekennzeichnet, dass das Arbeitsgerät als Setzgerät zum Eintreiben von Befestigungselementen in einen Untergrund ausgebildet ist, aufweisend eine Aufnahme, welche dafür vorgesehen ist, ein Befestigungselement aufzunehmen, wobei der Arbeitskolben oder der Stator dafür vorgesehen ist, ein in der Aufnahme aufgenommenes Befestigungselement entlang der Arbeitsachse in den Untergrund zu befördern, und wobei der Antrieb dafür vorgesehen ist, den Arbeitskolben entlang der Arbeitsachse auf das Befestigungselement zu anzutreiben.

Unter einem Kondensator im Sinne der Erfindung ist ein elektrisches Bauelement zu verstehen, welches elektrische Ladung und die damit verbundene Energie in einem elektrischen Feld speichert. Insbesondere weist ein Kondensator zwei elektrisch leitende Elektroden auf, zwischen denen sich das elektrische Feld aufbaut, wenn die Elektroden elektrisch unterschiedlich geladen werden. Unter einem Befestigungselement im Sinne der Erfindung ist beispielsweise ein Nagel, ein Stift, eine Klammer, ein Clip, ein Bolzen, insbesondere Gewindebolzen oder dergleichen zu verstehen.

Unter einem weichmagnetischen Material im Sinne der Erfindung ist ein Material zu verstehen, welches eine hohe magnetische Sättigungsflussdichte und insbesondere eine kleine Koerzitivfeldstärke aufweist und somit ein das Material durchsetzendes Magnetfeld verstärkt. Insbesondere weist das weichmagnetische Material des Statorrahmens und/oder des Kolbenrahmens eine Sättigungsflussdichte von mindestens 1,0 T, bevorzugt mindestens 1,3 T, besonders bevorzugt mindestens 1,5 T, auf. Unter einem elektrisch leitenden Material im Sinne der Erfindung ist ein Material zu verstehen, welches eine hohe spezifische elektrische Leitfähigkeit aufweist, so dass ein das Material durchsetzendes Magnetfeld in dem Material Wirbelströme erzeugt. Ein weichmagnetisches und/oder elektrisch leitendes Material besteht bevorzugt aus einem ferromagnetischen Material, besonders bevorzugt aus einem ferromagnetischen Metall, beispielsweise Eisen, Kobalt, Nickel, oder einer Legierung mit einem oder mehreren ferromagnetischen Metallen als Hauptbestandteil.

In den Zeichnungen ist die Erfindung in mehreren Ausführungsbeispielen dargestellt.

Es zeigen:
- Fig. 1: ein Arbeitsgerät in einem Längsschnitt,
- Fig. 2: eine Stator-Arbeitskolben-Einheit eines Arbeitsgeräts in einem perspektivischen Längsschnitt,
- Fig. 3: eine Stator-Arbeitskolben-Einheit eines Arbeitsgeräts in einem Längsschnitt,
- Fig. 4: eine Stator-Arbeitskolben-Einheit eines Arbeitsgeräts in einem Längsschnitt, und
- Fig. 5: ein elektrisches Schaltdiagramm eines Antriebs.

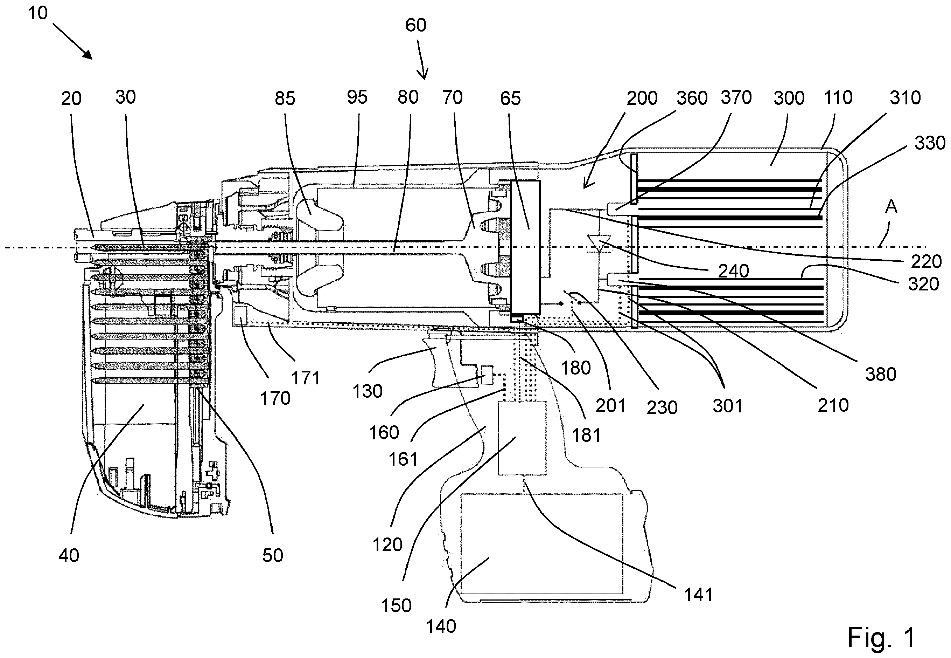

In Fig. 1 ist ein Arbeitsgerät 10 zum Bearbeiten eines nicht gezeigten Untergrunds in einem Längsschnitt dargestellt, welches als handgeführtes Setzgerät zum Eintreiben von Befestigungselementen in den Untergrund ausgebildet ist. Das Arbeitsgerät 10 weist eine als Bolzenführung ausgebildete Aufnahme 20 auf, in welcher ein als Nagel ausgebildetes Befestigungselement 30 aufgenommen ist, um entlang einer Arbeitsachse A in den Untergrund eingetrieben zu werden (in Fig. 1 nach links). Für eine Zuführung von Befestigungselementen zu der Aufnahme umfasst das Arbeitsgerät 10 ein Magazin 40, in welchem die Befestigungselemente einzeln oder in Form eines Befestigungselementestreifens 50 magaziniert aufgenommen sind und nach und nach in die Aufnahme 20 transportiert werden. Das Magazin 40 weist dafür ein nicht näher bezeichnetes federbeaufschlagtes Vorschubelement auf.

Das Arbeitsgerät 10 weist einen Arbeitskolben 60 auf, welcher einen Kolbenteller 70 und eine Kolbenstange 80 umfasst. Der Arbeitskolben 60 ist dafür vorgesehen, das Befestigungselement 30 aus der Aufnahme 20 heraus entlang der Arbeitsachse A in den Untergrund zu befördern. Hierbei ist der Arbeitskolben 60 mit seinem Kolbenteller 70 in einem Führungszylinder 95 entlang der Arbeitsachse A geführt. Bei nicht gezeigten Ausführungsbeispielen ist der Arbeitskolben von zwei, drei oder mehr Führungselementen, beispielsweise Führungsstangen entlang der Arbeitsachse geführt. Der Arbeitskolben 60 wird seinerseits von einem Antrieb 65 angetrieben, welcher einen Schaltkreislauf 200 und einen Kondensator 300 umfasst. Der Schaltkreislauf 200 ist dafür vorgesehen, eine elektrische Schnellentladung des zuvor aufgeladenen Kondensators 300 herbeizuführen und den dabei fliessenden Entladestrom dem Antrieb 65 zuzuführen.

Das Arbeitsgerät 10 umfasst weiterhin ein Gehäuse 110, in welchem der Antrieb 65 aufgenommen ist, einen Griff 120 mit einem als Abzug ausgebildeten Betätigungselement 130, einen als Akkumulator ausgebildeten elektrischen Energiespeicher 140, eine Steuereinheit 150, einen Auslöseschalter 160, einen Anpressschalter 170, einen an dem Antrieb 65 angeordneten Temperatursensor 180 und elektrische Verbindungsleitungen 141, 161, 171, 181, 201, 301, welche die Steuereinheit 150 mit dem elektrischen Energiespeicher 140, dem Auslöseschalter 160, dem Anpressschalter 170, dem Temperatursensor 180, dem Schaltkreislauf 200 beziehungsweise dem Kondensator 300 verbinden. Bei nicht gezeigten Ausführungsbeispielen wird das Arbeitsgerät 10 anstelle des elektrischen Energiespeichers 140 oder zusätzlich zu dem elektrischen Energiespeicher 140 mittels eines Netzkabels mit elektrischer Energie versorgt. Die Steuereinheit umfasst elektronische Bauteile, vorzugsweise auf einer Platine miteinander zu einem oder mehreren Steuerstromkreisen verschaltet, insbesondere einen oder mehrere Mikroprozessoren.

Wenn das Arbeitsgerät 10 an einen nicht gezeigten Untergrund (in Fig. 1 nach links) angepresst wird, betätigt ein nicht näher bezeichnetes Anpresselement den Anpressschalter 170, welcher dadurch mittels der Verbindungsleitung 171 ein Anpresssignal an die Steuereinheit 150 überträgt. Davon ausgelöst leitet die Steuereinheit 150 einen Kondensator-Aufladevorgang ein, bei welchem elektrische Energie mittels der Verbindungsleitung 141 von dem elektrischen Energiespeicher 140 zu der Steuereinheit 150 und mittels der Verbindungsleitungen 301 von der Steuereinheit 150 zu dem Kondensator 300 geleitet wird, um den Kondensator 300 elektrisch aufzuladen. Die Steuereinheit 150 umfasst hierzu einen nicht näher bezeichneten Schaltwandler, welcher den elektrischen Strom aus dem elektrischen Energiespeicher 140 in einen geeigneten Ladestrom für den Kondensator 300 umwandelt. Wenn der Kondensator 300 aufgeladen und der Arbeitskolben 60 in seiner in Fig. 1 dargestellten setzbereiten Position ist, befindet sich das Arbeitsgerät 10 in einem setzbereiten Zustand. Dadurch, dass die Aufladung des Kondensators 300 erst durch das Anpressen des Arbeitsgeräts 10 an den Untergrund bewirkt wird, ist zur Erhöhung der Sicherheit von umstehenden Personen ein Setzvorgang nur dann ermöglicht, wenn das Arbeitsgerät 10 an den Untergrund angepresst ist. Bei nicht gezeigten Ausführungsbeispielen leitet die Steuereinheit den Kondensator-Aufladevorgang bereits bei einem Einschalten des Arbeitsgeräts oder bei einem Abheben des Arbeitsgeräts von dem Untergrund oder bei Beendigung eines vorausgegangenen Eintreibvorgangs ein.

Wenn bei setzbereitem Arbeitsgerät 10 das Betätigungselement 130 betätigt wird, beispielsweise durch Ziehen mit dem Zeigefinger der Hand, welche den Griff 120 umgreift, betätigt das Betätigungselement 130 den Auslöseschalter 160, welcher dadurch mittels der Verbindungsleitung 161 ein Auslösesignal an die Steuereinheit 150 überträgt. Davon ausgelöst leitet die Steuereinheit 150 einen Kondensator-Entladevorgang ein, bei dem in dem Kondensator 300 gespeicherte elektrische Energie mittels des Schaltkreislaufs 200 von dem Kondensator 300 zu dem Antrieb 65 geleitet wird, indem der Kondensator 300 elektrisch entladen wird.

Der in Fig. 1 schematisch dargestellte Schaltkreislauf 200 umfasst hierzu zwei Entladeleitungen 210, 220, welche den Kondensator 300 mit dem Antrieb 65 verbinden und von denen zumindest eine Entladeleitung 210 von einem normalerweise geöffneten Entladeschalter 230 unterbrochen ist. Der Schaltkreislauf 200 bildet mit dem Antrieb 65 und dem Kondensator 300 unter Umständen einen elektrischen Schwingkreis. Ein Hin- und Herschwingen dieses Schwingkreises und/oder ein negatives Aufladen des Kondensators 300 wirkt sich unter Umständen negativ auf einen Wirkungsgrad des Antriebs 65 aus, lässt sich aber mit Hilfe einer Freilaufdiode 240 unterbinden. Die Entladeleitungen 210, 220 sind mittels an einer der Aufnahme 20 zugewandten Stirnseite 360 des Kondensators 300 angeordneter elektrischer Kontakte 370, 380 des Kondensators 300 elektrisch mit jeweils einer auf einer Trägerfolie 330 angeordneten Elektrode 310, 320 des Kondensators 300 verbunden, beispielsweise durch Verlöten, Verschweissen, Verschrauben, Verklemmen oder Formschluss. Der Entladeschalter 230 eignet sich vorzugsweise zum Schalten eines Entladestroms mit hoher Stromstärke und ist beispielsweise als Thyristor ausgebildet. Ausserdem haben die Entladeleitungen 210, 220 einen geringen Abstand zueinander, damit ein von ihnen induziertes parasitäres Magnetfeld möglichst gering ist. Beispielsweise sind die Entladeleitungen 210, 220 zu einer Sammelschiene ("Bus Bar") zusammengefasst und mit einem geeigneten Mittel, beispielsweise einem Halter oder einer Klammer, zusammengehalten. Bei nicht gezeigten Ausführungsbeispielen ist die Freilaufdiode elektrisch parallel zu dem Entladeschalter geschaltet. Bei weiteren nicht gezeigten Ausführungsbeispielen ist keine Freilaufdiode in dem Schaltkreis vorgesehen.

Zur Einleitung des Kondensator-Entladevorgangs schliesst die Steuereinheit 150 mittels der Verbindungsleitung 201 den Entladeschalter 230, wodurch ein Entladestrom des Kondensators 300 mit hoher Stromstärke durch den Antrieb 65 fliesst, welcher den Arbeitskolben 60 auf die Aufnahme 20 sowie das darin aufgenommene Befestigungselement 30 zu antreibt. Sobald die Kolbenstange 80 des Arbeitskolbens 60 auf einen nicht näher bezeichneten Kopf des Befestigungselements 30 trifft, wird das Befestigungselement 30 von dem Arbeitskolben 60 in den Untergrund eingetrieben. Überschüssige Bewegungsenergie des Arbeitskolbens 60 wird von einem Bremselement 85 aus einem federelastischen und/oder dämpfenden Material, beispielsweise Gummi oder einem Elastomer, aufgenommen, indem sich der Arbeitskolben 60 mit seinem Kolbenteller 70 gegen das Bremselement 85 bewegt und von diesem bis zu einem Stillstand abgebremst wird. Danach wird der Arbeitskolben 60 von einer nicht näher bezeichneten Rückstellvorrichtung in die setzbereite Position zurückgestellt.

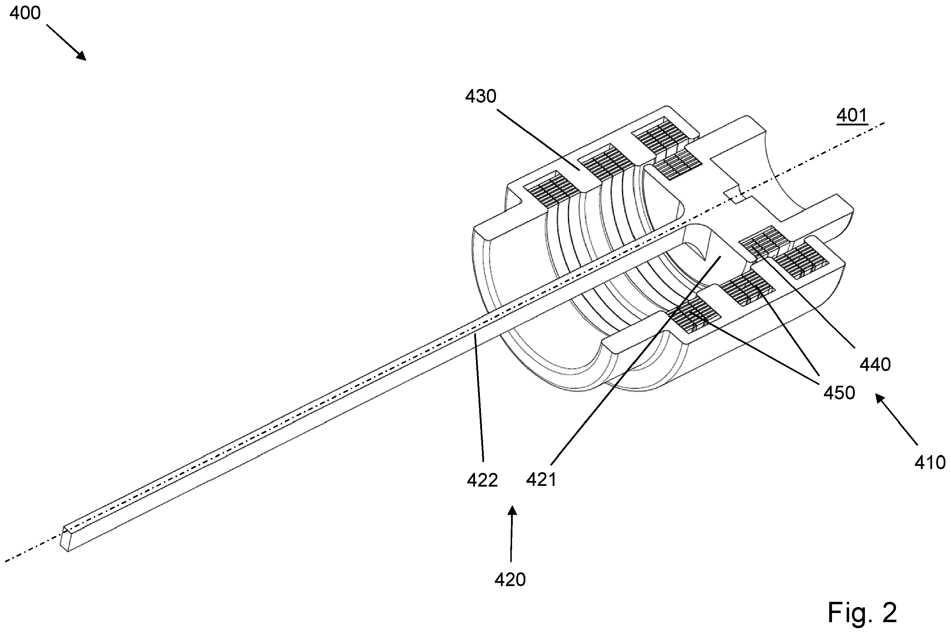

In Fig. 2 ist eine eine Stator-Arbeitskolben-Einheit 400 eines Arbeitsgeräts, beispielsweise des in Fig. 1 gezeigten Arbeitsgeräts 10 dargestellt. Die Antrieb-Arbeitskolben-Einheit 400 ist entlang einer Arbeitsachse 401 längs aufgeschnitten dargestellt und umfasst einen teilweise gezeigten Antrieb 410, einen Arbeitskolben 420 und einen Stator 430. Der Arbeitskolben 420 weist einen Kolbenkörper 421 und eine Kolbenstange 422 auf und ist dafür vorgesehen, sich relativ zu dem Stator 430 entlang der Arbeitsachse 401 zu bewegen. Der Antrieb 410 ist dafür vorgesehen, den Arbeitskolben 420 entlang der Arbeitsachse 401 anzutreiben. Hierzu umfasst der Antrieb 410 einen nicht gezeigten Kolbenspulenkondensator sowie einen oder mehrere nicht gezeigte Statorspulenkondensatoren und eine an dem Arbeitskolben 420 angeordnete Kolbenspule 440 sowie mehrere an dem Stator angeordnete Statorspulen 450 auf.

Die Kolbenspule 440 ist elektrisch mit dem Kolbenspulenkondensator verbindbar, um bei einer Schnellentladung des Kolbenspulenkondensators mit Strom durchflossen zu werden und ein erstes Magnetfeld zu erzeugen. Die Statorspulen 450 sind elektrisch mit den Statorspulenkondensator verbindbar, um bei einer Schnellentladung jeweils eines Statorspulenkondensators mit Strom durchflossen zu werden und zweite Magnetfelder zu erzeugen, welche mit dem ersten Magnetfeld wechselwirken und zeitlich aufeinander abgestimmt abstossende Kräfte zwischen der Kolbenspule 440 und jeweils einer der Statorspulen 450 bewirken und den Arbeitskolben 420 entlang der Arbeitsachse 401 aus dem Stator 430 heraus beschleunigen. Abstossende Kräfte zwischen der Kolbenspule 440 und jeweils einer Statorspule 450 werden beispielsweise dadurch bewirkt, dass das von der jeweiligen Statorspule 450 erzeugte Magnetfeld dem von der Kolbenspule 440 erzeugten Magnetfeld entgegengesetzt ist. Die Kolbenspule 440 und die Statorspulen 450 werden hierzu bevorzugt gegensinnig und zeitlich nacheinander mit elektrischem Strom beaufschlagt, indem der Kolbenspulenkondensator und die Statorspulenkondensatoren entsprechend zeitlich aufeinander abgestimmt entladen werden, beispielsweise von einer nicht gezeigten Steuereinheit gesteuert. Die Kolbenspule 440 und die Statorspulen 450 weisen jeweils eine Kolbenspulenachse beziehungsweise eine Statorspulenachse auf, welche mit der Arbeitsachse 401 zusammenfallen und somit parallel zueinander orientiert sind.

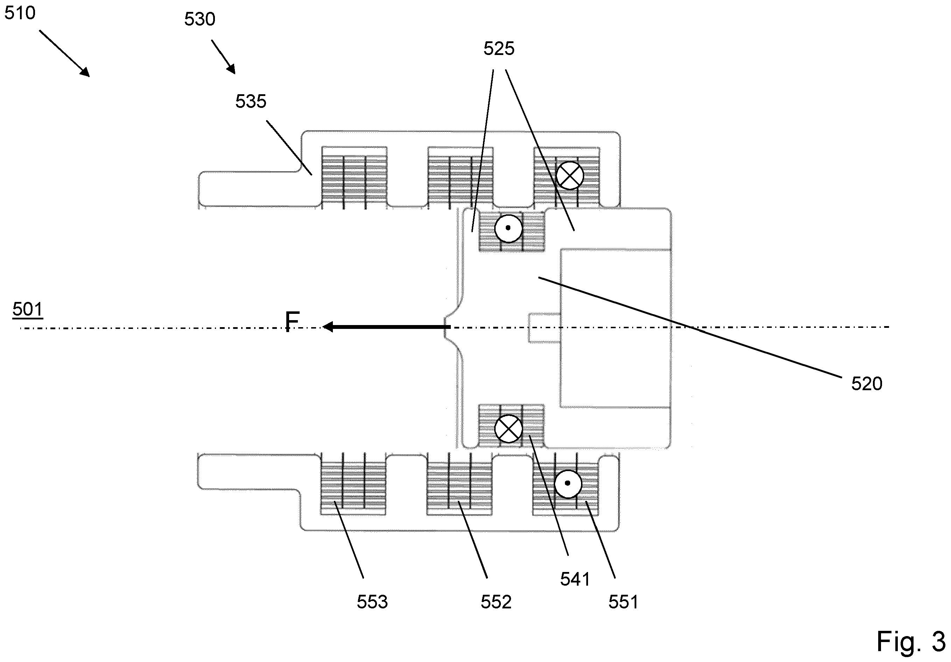

In Fig. 3 ist ein Antrieb 510 eines Arbeitsgeräts, beispielsweise des in Fig. 1 gezeigten Arbeitsgeräts 10 dargestellt. Der Antrieb 510 ist entlang einer Arbeitsachse 501 längs aufgeschnitten dargestellt und dafür vorgesehen, einen Arbeitskolben 520 mit einem Kolbenkörper und einer nicht gezeigten Kolbenstange entlang der Arbeitsachse 501 anzutreiben und relativ zu einem Stator 530 zu bewegen. Der Antrieb 510 umfasst eine an dem Arbeitskolben 520 angeordnete Kolbenspule 541, eine an dem Stator 530 angeordnete erste Statorspule 551, eine an dem Stator 530 angeordnete zweite Statorspule 552 und eine an dem Stator 530 angeordnete dritte Statorspule 553. Die Kolbenspule 541 ist elektrisch mit einem nicht gezeigten Kolbenspulenkondensator verbindbar, um bei einer Schnellentladung des Kondensators mit Strom durchflossen zu werden. Ein Stromfluss durch die Kolbenspule 541 erzeugt dabei ein erstes Magnetfeld. Die Statorspulen 551, 552, 553 sind elektrisch mit jeweils einem nicht gezeigten Statorspulenkondensator verbindbar, um bei einer Schnellentladung des jeweiligen Statorspulenkondensators mit Strom durchflossen zu werden. Ein Stromfluss durch die Statorspulen 551, 552, 553 erzeugt zweite Magnetfelder.

Die Kolbenspule 541 und die Statorspulen 551, 552, 553 weisen jeweils eine Kolbenspulenachse beziehungsweise eine Statorspulenachse auf, welche mit der Arbeitsachse 501 zusammenfallen und somit parallel zueinander orientiert sind. Die Kolbenspule 541 und die Statorspulen 551, 552, 553 sind gleichsinnig gewickelt. Bei nicht gezeigten Ausführungsbeispielen ist die Kolbenspule relativ zu den Statorspulen gegensinnig gewickelt. Vorzugsweise weisen die Kolbenspule 541 und die Statorspulen 551, 552, 553 jeweils gleich viele Spulenwindungen auf, so dass die von den Spulen 541, 551, 552, 553 erzeugten Magnetfelder im Wesentlichen gleich stark sind.

Bevorzugt besteht der Kolben 520 vorzugsweise aus einem weichmagnetischen Material, wie beispielsweise Eisen oder eine Legierung davon, beispielsweise Stahl. Der Stator 530 weist einen Statorrahmen 535 auf, welcher vorzugsweise aus einem weichmagnetischen Material besteht, wie beispielsweise Eisen oder eine Legierung davon, beispielsweise Stahl. Der Statorrahmen 535 umgibt die Statorspulen 551, 552, 553 und erstreckt sich bezüglich der Arbeitsachse 501 in einer umlaufenden Richtung. Dadurch werden die von den Statorspulen 551, 552, 553 erzeugten Magnetfelder im Bereich der Kolbenspule 541 verstärkt und die beschleunigende Kraft zwischen dem Stator 530 und dem Arbeitskolben 520 erhöht.

Der Antrieb 510 ist dafür vorgesehen, den Arbeitskolben 520 von einer in Fig. 3 gezeigten Startposition aus entlang der Arbeitsachse 501 nach vorne auf den Untergrund zu (in Fig. 3 nach links) anzutreiben. In der Startposition taucht die Kolbenspule 541 teilweise in die erste Statorspule 551 ein und ist relativ zu der ersten Statorspule nach vorne versetzt angeordnet. In Fig. 3 sind die Spulen 541, 551 mit Kreissymbolen versehen, wobei ein Punkt im Kreis einen Stromfluss aus der Zeichenebene heraus und ein Kreuz im Kreis einen Stromfluss in die Zeichenebene hinein darstellt. Die Kolbenspule 541 und die erste Statorspule 551 sind gegensinnig mit Strom beaufschlagt und erzeugen daher einander entgegengesetzte Magnetfelder, so dass die Kolbenspule 541 nach vorne aus der ersten Statorspule 551 heraus beschleunigt wird. Sobald die Kolbenspule 541 vollständig in die zweite Statorspule 552 eingetaucht ist, werden die Kolbenspule 541 und die zweite Statorspule 552 gegensinnig mit Strom beaufschlagt, so dass die Kolbenspule 541 noch weiter nach vorne aus der zweiten Statorspule 552 heraus beschleunigt wird, nachdem die Kolbenspule 541 aus der ersten Statorspule 551 heraus beschleunigt wurde. Sobald die Kolbenspule 541 vollständig in die dritte Statorspule 553 eingetaucht ist, werden die Kolbenspule 541 und die dritte Statorspule 553 gegensinnig mit Strom beaufschlagt, so dass die Kolbenspule 541 noch weiter nach vorne aus der dritten Statorspule 553 heraus beschleunigt wird, nachdem die Kolbenspule 541 aus der zweiten Statorspule 552 heraus beschleunigt wurde.

Insgesamt wird die Kolbenspule 541 dreimal nacheinander nach vorne beschleunigt. Bei nicht gezeigten Ausführungsbeispielen ist die Kolbenspule in der Startposition relativ zu der ersten Statorspule nach hinten versetzt angeordnet und die Kolbenspule und die erste Statorspule werden gleichsinnig mit elektrischem Strom beaufschlagt, so dass die Kolbenspule in die erste Statorspule hinein beschleunigt wird. Die Kolbenspule 541 weist einen Kolbenspulenaussendurchmesser auf, welcher grösser ist als ein Statorspuleninnendurchmesser der ersten Statorspule 551. Während sich der Arbeitskolben 520 nach vorne bewegt, taucht die Kolbenspule 541 in die zweite Statorspule 552 ein und vollständig durch die zweite Statorspule 552 hindurch, ebenso durch die dritte Statorspule 553.

Der Arbeitskolben 520 weist zwei Reluktanzelemente 525 aus einem weichmagnetischen Material auf, welche als umlaufende Vorsprünge des Arbeitskolbens 520 ausgebildet sind. In der in Fig. 3 gezeigten Startposition des Arbeitskolbens 520 werden die Reluktanzelemente 525 jeweils von einem Magnetfeld, das von einer der Statorspulen 551, 552, 553 erzeugt wird, in die jeweilige Statorspule 551, 552, 553 hineinbeschleunigt. Dies erhöht eine gesamte Beschleunigung des Arbeitskolbens 520 nach vorne.

Durch das Eintauchen der Kolbenspule 541 findet eine Kraftübertragung über eine relativ lange Zeit und/oder einen relativ langen Weg des Arbeitskolbens 520 statt, so dass eine relativ kleine Maximalkraft für eine ausreichende Energieübertragung erforderlich ist. Dadurch sind mechanische Belastungen auf sämtliche Bauteile des Antriebs 510 reduziert. Ausserdem ist ein relativ kleiner Maximalstrom erforderlich. Darüber hinaus wird entstehende Abwärme auf mehrere Spulen verteilt, was eine Kühlung des Antriebs 519 erleichtert.

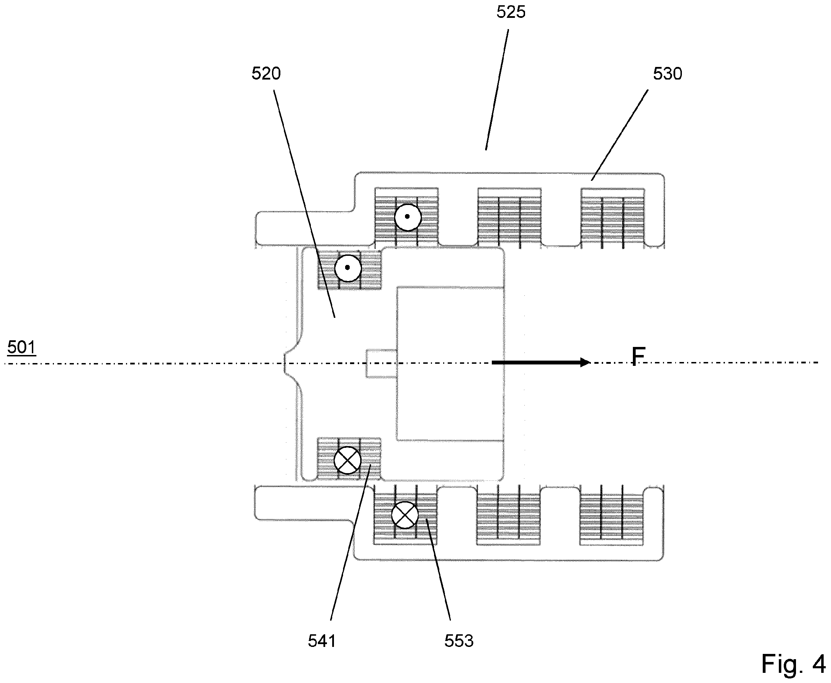

In Fig. 4 sind der Arbeitskolben 520 und der Stator 530 in einer ersten Endposition des Arbeitskolbens 520 entlang der Arbeitsachse 501 dargestellt. Die Kolbenspule 541 ist relativ zur dritten Statorspule 553 entlang der Arbeitsachse 501 nach vorne versetzt angeordnet. Durch gleichsinnige Beaufschlagung der Kolbenspule 541 und der dritten Statorspule 553 ist es möglich, den Arbeitskolben 520 nach hinten zu beschleunigen, um ihn in die Startposition zu befördern. Dies erfordert eine Umpolung oder separate Bestromung der Kolbenspule 541 oder der dritten Statorspule 553.

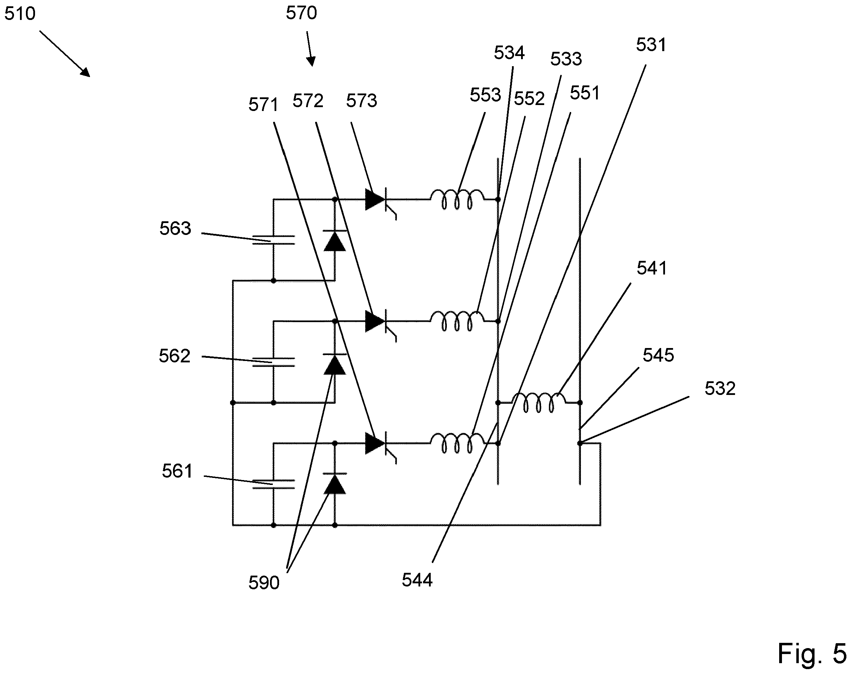

In Fig. 5 ist ein elektrisches Schaltdiagramm des in Fig. 3 gezeigten Antriebs 510 dargestellt. Der Antrieb 510 umfasst einen ersten Kondensator 561, einen zweiten Kondensator 562, einen dritten Kondensator 563, einen Schaltkreislauf 570 mit drei Freilaufdioden 590, einem ersten Schalter 571, einem zweiten Schalter 572 sowie einem dritten Schalter 573, eine an dem Arbeitskolben angeordnete Kolbenspule 541, eine an dem Stator angeordnete erste Statorspule 551, eine an dem Stator angeordnete zweite Statorspule 552 und eine an dem Stator angeordnete dritte Statorspule 553. Die Kolbenspule 541 ist elektrisch mit jedem Kondensator 561, 562, 563 verbindbar, um bei einer Schnellentladung des jeweiligen Kondensators 561, 562, 563 mit Strom durchflossen zu werden, so dass jeder der Kondensatoren 561, 562, 563 einen Kolbenspulenkondensator darstellt. Die Statorspulen 551, 552, 553 sind ebenfalls elektrisch jeweils mit einem der Kondensatoren 561, 562, 563 verbindbar, um bei einer Schnellentladung des jeweiligen Kondensators 561, 562, 563 mit Strom durchflossen zu werden, so dass jeder der Kondensatoren 561, 562, 563 auch einen Statorspulenkondensator darstellt.

Der erste Kondensator 561 ist mit einem Eingang des ersten Schalters 571 elektrisch verbunden. Ein Ausgang des ersten Schalters 571 ist mit einem Eingang der ersten Statorspule 551 elektrisch verbunden, bevorzugt fest verdrahtet. Ein Ausgang der ersten Statorspule 551 ist mit einem als Kontaktbürste ausgebildeten ersten elektrischen Statorkontakt 531 elektrisch verbunden, bevorzugt fest verdrahtet. Der zweite Kondensator 562 ist mit einem Eingang des zweiten Schalters 572 elektrisch verbunden. Ein Ausgang des zweiten Schalters 572 ist mit einem Eingang der zweiten Statorspule 552 elektrisch verbunden, bevorzugt fest verdrahtet. Ein Ausgang der zweiten Statorspule 552 ist mit einem als Kontaktbürste ausgebildeten zweiten elektrischen Statorkontakt 533 elektrisch verbunden, bevorzugt fest verdrahtet. Der dritte Kondensator 563 ist mit einem Eingang des dritten Schalters 573 elektrisch verbunden. Ein Ausgang des dritten Schalters 573 ist mit einem Eingang der dritten Statorspule 553 elektrisch verbunden, bevorzugt fest verdrahtet. Ein Ausgang der dritten Statorspule 553 ist mit einem als Kontaktbürste ausgebildeten dritten elektrischen Statorkontakt 534 elektrisch verbunden, bevorzugt fest verdrahtet.

Ein Eingang der Kolbenspule 541 ist mit einem als Kontaktschiene ausgebildeten ersten Kolbenkontakt 544, welchen der Arbeitskolben aufweist, elektrisch verbunden, bevorzugt fest verdrahtet. Der erste Kolbenkontakt 544 gleitet elektrisch leitend an den Statorkontakten 531, 533, 534 entlang, wenn sich der Arbeitskolben entlang der Arbeitsachse bewegt. Eine oder mehrere nicht gezeigte erste Federn belasten die Statorkontakte 531, 533, 534 auf den ersten Kolbenkontakt 544 zu. Bei nicht gezeigten Ausführungsbeispielen belastet eine Feder zusätzlich oder alternativ den ersten Kolbenkontakt auf den ersten Statorkontakt zu. Ein Ausgang der Kolbenspule 541 ist mit einem als Kontaktschiene ausgebildeten zweiten Kolbenkontakt 545, welchen der Arbeitskolben aufweist, elektrisch verbunden, bevorzugt fest verdrahtet. Der zweite Kolbenkontakt 545 gleitet elektrisch leitend an einem Massekontakt 532 entlang, wenn sich der Arbeitskolben entlang der Arbeitsachse bewegt. Der Stator 530 weist den Massekontakt 532 auf, welcher als Kontaktbürste ausgebildet und mit einem nicht gezeigten Massepotential elektrisch verbunden ist, mit welchem auch die Kondensatoren 561, 562, 563 elektrisch verbunden sind. Eine nicht gezeigte zweite Feder belastet den Massekontakt 532 auf den zweiten Kolbenkontakt 545 zu. Bei nicht gezeigten Ausführungsbeispielen belastet eine Feder zusätzlich oder alternativ den zweiten Kolbenkontakt auf den Massekontakt zu. Die Kolbenkontakte 544, 545 sind starr mit dem übrigen Arbeitskolben verbunden und bewegen sich mit dem übrigen Arbeitskolben mit. Bei nicht gezeigten Ausführungsbeispielen ist der erste und/oder der zweite Statorkontakt als Schleifring ausgebildet.

Die jeweilige Schnellentladung der Kondensatoren 561, 562, 563 über die Kolbenspule 541 und die Statorspulen 551, 552, 553 ist mittels des Schaltkreislaufs 570 auslösbar, indem zunächst der erste Schalter 571 bei elektrisch aufgeladenem ersten Kondensator 561 geschlossen und die erste Statorspule 551 sowie die Kolbenspule 541 elektrisch mit dem ersten Kondensator 561 verbunden werden. Der elektrische Strom fliesst dann von dem ersten Kondensator 561 durch den ersten Schalter 571, durch die erste Statorspule 551, durch den ersten Statorkontakt 531 und den ersten Kolbenkontakt 544, durch die Kolbenspule 541 und schliesslich durch den zweiten Kolbenkontakt 545 und den Massekontakt 532 zum ersten Kondensator 561. Sobald die Kolbenspule 541 vollständig in die zweite Statorspule 552 eingetaucht ist, werden der zweite Schalter 572 bei elektrisch aufgeladenem ersten Kondensator 562 geschlossen und die zweite Statorspule 552 sowie die Kolbenspule 541 elektrisch mit dem zweiten Kondensator 562 verbunden. Der elektrische Strom fliesst dann von dem zweiten Kondensator 562 durch den zweiten Schalter 572, durch die zweite Statorspule 552, durch den zweiten Statorkontakt 533 und den ersten Kolbenkontakt 544, durch die Kolbenspule 541 und schliesslich durch den zweiten Kolbenkontakt 545 und den Massekontakt 532 zum zweiten Kondensator 562. Sobald die Kolbenspule 541 vollständig in die dritte Statorspule 553 eingetaucht ist, werden der dritte Schalter 573 bei elektrisch aufgeladenem dritten Kondensator 563 geschlossen und die dritte Statorspule 553 sowie die Kolbenspule 541 elektrisch mit dem dritten Kondensator 563 verbunden. Der elektrische Strom fliesst dann von dem dritten Kondensator 563 durch den dritten Schalter 573, durch die dritte Statorspule 553, durch den dritten Statorkontakt 534 und den ersten Kolbenkontakt 544, durch die Kolbenspule 541 und schliesslich durch den zweiten Kolbenkontakt 545 und den Massekontakt 532 zum dritten Kondensator 563.

Die Erfindung wurde anhand einer Reihe von in den Zeichnungen dargestellten und nicht dargestellten Ausführungsbeispielen beschrieben. Die einzelnen Merkmale der verschiedenen Ausführungsbeispiele sind einzeln oder in beliebiger Kombination miteinander anwendbar, soweit sie sich nicht widersprechen. Es wird darauf hingewiesen, dass das erfindungsgemässe Arbeitsgerät auch für andere Anwendungen einsetzbar ist, beispielsweise als Bohrhammer oder dergleichen.

## Patentansprüche

1. Arbeitsgerät zum Bearbeiten eines Untergrunds, aufweisend einen Stator (430) und einen Arbeitskolben (420), welcher dafür vorgesehen ist, sich relativ zu dem Stator (430) entlang einer Arbeitsachse zu bewegen, weiterhin aufweisend einen Antrieb (410), welcher dafür vorgesehen ist, den Arbeitskolben (420) entlang der Arbeitsachse von einer Startposition aus auf den Untergrund zu anzutreiben, **dadurch gekennzeichnet, dass** der Antrieb (410) eine an dem Arbeitskolben (420) angeordnete Kolbenspule (440) und eine an dem Stator (430) angeordnete erste Statorspule (451) aufweist, wobei die erste Statorspule (451) und/oder die Kolbenspule (440) dafür vorgesehen ist, mit Strom durchflossen zu werden und ein Magnetfeld zu erzeugen, und wobei die Kolbenspule (440) dafür vorgesehen ist, während einer Bewegung des Arbeitskolbens (420) relativ zu dem Stator (430) entlang der Arbeitsachse in die erste Statorspule (451) einzutauchen.

2. Arbeitsgerät nach Anspruch 1, wobei die Kolbenspule (440) eine Kolbenspulenachse aufweist und die erste Statorspule (451) eine erste Statorspulenachse aufweist, welche parallel zur Kolbenspulenachse orientiert ist und insbesondere mit der Kolbenspulenachse zusammenfällt.

3. Arbeitsgerät nach Anspruch 2, wobei die Kolbenspule (440) und die erste Statorspule (451) gleichsinnig mit Strom beaufschlagbar sind, um einander gleichgerichtete Magnetfelder zu erzeugen und die Kolbenspule (440) in die erste Statorspule (451) hinein zu beschleunigen.

4. Arbeitsgerät nach Anspruch 3, wobei der Antrieb (410) eine an dem Stator (430) angeordnete zweite Statorspule (452) aufweist, welche relativ zu der ersten Statorspule (451) entlang der Arbeitsachse versetzt angeordnet ist und eine zweite Statorspulenachse aufweist, welche parallel zur Kolbenspulenachse orientiert ist, wobei die Kolbenspule (440) und die zweite Statorspule (452) gleichsinnig mit Strom beaufschlagbar sind, um einander gleichgerichtete Magnetfelder zu erzeugen und die Kolbenspule (440) in die zweite Statorspule (452) hinein zu beschleunigen, nachdem die Kolbenspule (440) in die erste Statorspule (451) hinein beschleunigt wurde, wobei die Kolbenspule (440) relativ zu der ersten Statorspule (451) und relativ zu der zweiten Statorspule (452) in die gleiche Richtung beschleunigt wird.

5. Arbeitsgerät nach einem der Ansprüche 2 bis 4, wobei die Kolbenspule (440) und die erste Statorspule (451) gegensinnig mit Strom beaufschlagbar sind, um einander entgegengesetzte Magnetfelder zu erzeugen und die Kolbenspule (440) aus der ersten Statorspule (451) heraus zu beschleunigen.

6. Arbeitsgerät nach Anspruch 5, wobei der Antrieb (410) eine an dem Stator (430) angeordnete zweite Statorspule (452) aufweist, welche relativ zu der ersten Statorspule (451) entlang der Arbeitsachse versetzt angeordnet ist und eine zweite Statorspulenachse aufweist, welche parallel zur Kolbenspulenachse orientiert ist, wobei die Kolbenspule (440) und die zweite Statorspule (452) gegensinnig mit Strom beaufschlagbar sind, um einander entgegengerichtete Magnetfelder zu erzeugen und die Kolbenspule (440) aus der zweiten Statorspule (452) heraus zu beschleunigen, nachdem die Kolbenspule (440) aus der ersten Statorspule (451) heraus beschleunigt wurde, wobei die Kolbenspule (440) relativ zu der ersten Statorspule (451) und relativ zu der zweiten Statorspule (452) in die gleiche Richtung beschleunigt wird.

7. Arbeitsgerät nach einem der Ansprüche 4 und 6, wobei die erste Statorspule (451) und die zweite Statorspule (452) relativ zueinander gleichsinnig gewickelt sind.

8. Arbeitsgerät nach einem der vorhergehenden Ansprüche, wobei der Antrieb (410) einen ersten Kondensator (561) aufweist, wobei die erste Statorspule (451) und/oder die Kolbenspule (440) elektrisch mit dem ersten Kondensator (561) verbindbar ist, um bei einer Schnellentladung des ersten Kondensators (561) mit Strom durchflossen zu werden und das Magnetfeld zu erzeugen.

9. Arbeitsgerät nach einem der Ansprüche 4, 6 und 7, und nach Anspruch 8, wobei der Antrieb (410) einen zweiten Kondensator (562) aufweist, wobei die zweite Statorspule (452) und/oder die Kolbenspule (440) elektrisch mit dem zweiten Kondensator (562) verbindbar ist, um bei einer Schnellentladung des zweiten Kondensators (562) mit Strom durchflossen zu werden und das Magnetfeld zu erzeugen.

10. Arbeitsgerät nach einem der Ansprüche 4 und 6 bis 9, umfassend eine Erfassungseinrichtung zum Erfassen einer Position des Arbeitskolbens (420) und eine Steuereinrichtung zur Beaufschlagung der zweiten Statorspule (452) mit elektrischem Strom in Abhängigkeit einer von der Erfassungseinrichtung erfassten Position des Arbeitskolbens.

11. Arbeitsgerät nach einem der vorhergehenden Ansprüche, wobei die Kolbenspule (440) und die erste Statorspule (451) elektrisch seriell miteinander verschaltet und relativ zueinander gleichsinnig oder gegensinnig gewickelt sind.

12. Arbeitsgerät nach einem der vorhergehenden Ansprüche, wobei die Kolbenspule (440) einen Kolbenspulenaussendurchmesser aufweist, und wobei die erste Statorspule (451) einen Statorspuleninnendurchmesser aufweist, welcher grösser ist als der Kolbenspulenaussendurchmesser.

13. Arbeitsgerät nach einem der vorhergehenden Ansprüche, wobei der Arbeitskolben (420) ein Reluktanzelement (525) aus einem weichmagnetischen Material aufweist, welches von dem Magnetfeld, das von der ersten Statorspule (451) erzeugt wird, in die erste Statorspule (451) hineinbeschleunigt wird.

14. Arbeitsgerät nach Anspruch 13, wobei das Reluktanzelement (525) quer zur Arbeitsachse von dem übrigen Arbeitskolben (420) auf die erste Statorspule (451) zu vorspringt.

15. Arbeitsgerät nach einem der vorhergehenden Ansprüche, aufweisend eine Aufnahme (20), welche dafür vorgesehen ist, ein Befestigungselement aufzunehmen, wobei der Arbeitskolben (420) oder der Stator (430) dafür vorgesehen ist, ein in der Aufnahme (20) aufgenommenes Befestigungselement entlang der Arbeitsachse in den Untergrund zu befördern.

## Claims

1. Tool for working a substrate, having a stator (430) and a working piston (420), which is intended to move relative to the stator (430) along a working axis, also having a drive (410), which is intended to drive the working piston (420) from a starting position along the working axis to the substrate, **characterized in that** the drive (410) comprises a piston coil (440) arranged on the working piston (420) and a first stator coil (451) arranged on the stator (430), wherein the first stator coil (451) and/or the piston coil (440) are/is intended to have current flowing through them/it and to generate a magnetic field, and wherein the piston coil (440) is intended to enter the first stator coil (451) during a movement of the working piston (420) relative to the stator (430) along the working axis.

2. Tool according to Claim 1, wherein the piston coil (440) has a piston coil axis and the first stator coil (451) has a first stator coil axis, which is oriented parallel to the piston coil axis and in particular coincides with the piston coil axis.

3. Tool according to Claim 2, wherein the piston coil (440) and the first stator coil (451) can be supplied with current in the same direction in order to generate magnetic fields in the same direction and to accelerate the piston coil (440) into the first stator coil (451).

4. Tool according to Claim 3, wherein the drive (410) has a second stator coil (452) which is arranged on the stator (430), is arranged offset relative to the first stator coil (451) along the working axis and has a second stator coil axis, which is oriented parallel to the piston coil axis, wherein the piston coil (440) and the second stator coil (452) can be supplied with current in the same direction in order to generate magnetic fields in the same direction and to accelerate the piston coil (440) into the second stator coil (452) after the piston coil (440) has been accelerated into the first stator coil (451), wherein the piston coil (440) is accelerated in the same direction relative to the first stator coil (451) and relative to the second stator coil (452).

5. Tool according to one of Claims 2 to 4, wherein the piston coil (440) and the first stator coil (451) can be supplied with current in opposite directions in order to generate opposing magnetic fields and to accelerate the piston coil (440) out of the first stator coil (451).

6. Tool according to Claim 5, wherein the drive (410) has a second stator coil (452) which is arranged on the stator (430), is arranged offset relative to the first stator coil (451) along the working axis and has a second stator coil axis, which is oriented parallel to the piston coil axis, wherein the piston coil (440) and the second stator coil (452) can be supplied with current in opposite directions in order to generate opposing magnetic fields and to accelerate the piston coil (440) out of the second stator coil (452) after the piston coil (440) has been accelerated out of the first stator coil (451), wherein the piston coil (440) is accelerated in the same direction relative to the first stator coil (451) and relative to the second stator coil (452).

7. Tool according to either of Claims 4 and 6, wherein the first stator coil (451) and the second stator coil (452) are wound in the same direction relative to one another.

8. Tool according to one of the preceding claims, wherein the drive (410) has a first capacitor (561), wherein the first stator coil (451) and/or the piston coil (440) can be electrically connected to the first capacitor (561) in order during rapid discharge of the first capacitor (561) to have current flowing through them/it and to generate the magnetic field.

9. Tool according to one of Claims 4, 6 and 7 and according to Claim 8, wherein the drive (410) has a second capacitor (562), wherein the second stator coil (452) and/or the piston coil (440) can be electrically connected to the second capacitor (562) in order during rapid discharge of the second capacitor (562) to have current flowing through them/it and to generate the magnetic field.

10. Tool according to one of Claims 4 and 6 to 9, comprising a detection device for detecting a position of the working piston (420) and a control device for supplying electric current to the second stator coil (452) in dependence on a position of the working piston detected by the detection device.

11. Tool according to one of the preceding claims, wherein the piston coil (440) and the first stator coil (451) are electrically connected to one another in series and wound in the same direction or in opposite directions relative to one another.

12. Tool according to one of the preceding claims, wherein the piston coil (440) has a piston coil outer diameter, and wherein the first stator coil (451) has a stator coil inner diameter which is larger than the piston coil outer diameter.

13. Tool according to one of the preceding claims, wherein the working piston (420) comprises a reluctance element (525) composed of a soft-magnetic material, which is accelerated into the first stator coil (451) by the magnetic field that is generated by the first stator coil (451).

14. Tool according to Claim 13, wherein the reluctance element (525) projects transversely to the working axis from the rest of the working piston (420) towards the first stator coil (451).

15. Tool according to one of the preceding claims, having a receptacle (20) which is intended to receive a fastening element, wherein the working piston (420) or the stator (430) are intended to transfer a fastening element received in the receptacle (20) to the substrate along the working axis.

## Revendications

1. Unité de travail destinée à traiter un sol, ladite unité de travail comportant un stator (430) et un piston de travail (420), qui est prévu pour se déplacer par rapport au stator (430) le long d'un axe de travail, comportant en outre un entraînement (410), qui est prévu pour entraîner le piston de travail (420) le long de l'axe de travail depuis une position de départ jusqu'au sol, **caractérisé en ce que** l'entraînement (410) comporte une bobine de piston (440) disposée sur le piston de travail (420) et une première bobine de stator (451) disposée sur le stator (430), la première bobine de stator (451) et/ou la bobine de piston (440) étant prévues pour être alimentées en courant et générer un champ magnétique, et la bobine de piston (440) étant prévue pour être plongée dans la première bobine de stator (451) pendant un mouvement du piston de travail (420) par rapport au stator (430) le long de l'axe de travail.

2. Unité de travail selon la revendication 1, la bobine de piston (440) comportant un axe de bobine de piston et la première bobine de stator (451) comportant un premier axe de bobine de stator qui est orienté parallèlement à l'axe de bobine de piston et qui coïncide en particulier avec l'axe de bobine de piston.

3. Unité de travail selon la revendication 2, la bobine de piston (440) et la première bobine de stator (451) pouvant être alimentées en courant dans le même sens afin de générer des champs magnétiques mutuellement redressés et d'accélérer la bobine de piston (440) jusque dans la première bobine de stator (451).

4. Unité de travail selon la revendication 3, l'entraînement (410) comportant une deuxième bobine de stator (452) disposée sur le stator (430) et décalée par rapport à la première bobine de stator (451) le long de l'axe de travail et comportant un deuxième axe de bobine de stator qui est orienté parallèlement à l'axe de la bobine du piston, la bobine de piston (440) et la deuxième bobine de stator (452) peuvent être alimentées en courant dans le même sens afin de générer des champs magnétiques mutuellement redressés et d'accélérer la bobine de piston (440) jusque dans la deuxième bobine de stator (452) après que la bobine de piston (440) a été accélérée jusque dans la première bobine de stator (451), la bobine de piston (440) étant accélérée dans le même sens par rapport à la première bobine de stator (451) et par rapport à la deuxième bobine de stator (452).

5. Unité de travail selon l'une des revendications 2 à 4, la bobine de piston (440) et la première bobine de stator (451) pouvant être alimentées en courant dans des sens opposés afin de générer des champs magnétiques opposés et d'accélérer la bobine de piston (440) hors de la première bobine de stator (451).

6. Unité de travail selon la revendication 5, l'entraînement (410) comportant une deuxième bobine de stator (452) disposée sur le stator (430) et décalée par rapport à la première bobine de stator (451) le long de l'axe de travail et comportant un deuxième axe de bobine de stator qui est orienté parallèlement à l'axe de la bobine du piston, la bobine de piston (440) et la deuxième bobine de stator (452) pouvant être alimentées en courant dans des sens opposés afin de générer des champs magnétiques mutuellement opposés et d'accélérer la bobine de piston (440) hors de la deuxième bobine de stator (452) après que la bobine de piston (440) a été accélérée hors de la première bobine de stator (451), la bobine de piston (440) étant accélérée dans le même sens par rapport à la première bobine de stator (451) et par rapport à la deuxième bobine de stator (452).

7. Unité de travail selon l'une des revendications 4 et 6, la première bobine de stator (451) et la deuxième bobine de stator (452) étant enroulées dans le même sens l'une par rapport à l'autre.

8. Unité de travail selon l'une des revendications précédentes, l'entraînement (410) comportant un premier condensateur (561), la première bobine de stator (451) et/ou la bobine de piston (440) pouvant être reliées électriquement au premier condensateur (561) afin d'être alimentées en courant lors d'une décharge rapide du premier condensateur (561) et de générer le champ magnétique.

9. Unité de travail selon l'une des revendications 4, 6 et 7, et selon la revendication 8, l'entraînement (410) comportant un deuxième condensateur (562), la deuxième bobine de stator (452) et/ou la bobine de piston (440) pouvant être reliées électriquement au deuxième condensateur (562) afin d'être alimentées en courant lors d'une décharge rapide du deuxième condensateur (562) et de générer le champ magnétique.

10. Unité de travail selon l'une des revendications 4 et 6 à 9, comprenant un dispositif de détection destiné à détecter une position du piston de travail (420) et un dispositif de commande destiné à appliquer le courant électrique à la deuxième bobine de stator (452) en fonction d'une position du piston de travail détectée par le dispositif de détection.

11. Unité de travail selon l'une des revendications précédentes, la bobine de piston (440) et la première bobine de stator (451) étant montés électriquement en série l'une avec l'autre et étant enroulées dans des sens identiques ou opposés l'un par rapport à l'autre.

12. Unité de travail selon l'une des revendications précédentes, la bobine de piston (440) ayant un diamètre extérieur de bobine de piston, et la première bobine de stator (451) ayant un diamètre de bobine de stator intérieur qui est supérieur au diamètre de bobine de piston extérieur.

13. Unité de travail selon l'une des revendications précédentes, le piston de travail (420) comportant un élément à réluctance (525) en un matériau magnétique doux qui est accéléré jusque dans la première bobine de stator (451) par le champ magnétique généré par la première bobine de stator (451).

14. Unité de travail selon la revendication 13, l'élément à réluctance (525) faisant saillie transversalement à l'axe de travail depuis le piston de travail restant (420) vers la première bobine de stator (451).

15. Unité de travail selon l'une des revendications précédentes, comportant un logement (20) prévu pour recevoir un élément de fixation, le piston de travail (420) ou le stator (430) étant prévu pour transporter un élément de fixation reçu dans le logement (20) jusque dans le sol le long de l'axe de travail.
